# EUROPEAN PATENT APPLICATION

(11) **EP 1 983 716 A2**
(43) Date of publication of application: **22.10.2008**
(21) Application number: 07124186.3
(22) Date of filing: 31.12.2007
(51) Int. Cl.: H04L 29/06, G06F 21/00, H04N 7/167

(54) **Method and system of transmitting contents between devices**

(30) Priority: 16.03.2007 KR 20070026290
(71) Applicant: SAMSUNG ELECTRONICS CO., LTD., Suwon-si, Gyeonggi-do (KR)
(72) Inventor: Moon Ji-young, Gyeonggi-do (KR); Kim, Myung-sun, Gyeonggi-do (KR); Ju, Hak-soo, Gyeonggi-do (KR)
(74) Representative: Robinson, Ian Michael

(57) **Abstract**

A method of transmitting content between devices (100, 200) and a system therefor are provided. The method of transmitting encrypted content in a state in which the encrypted content and license information is stored in a first device (100) and in which an external device (200) is connected, includes: transmitting the license information corresponding to the encrypted content to the external device (200); transmitting the encrypted content to the external device (200), when receiving a request for transmitting the encrypted content from the external device (200); and updating the license information. Accordingly, content can be rapidly and stably transmitted between the devices (100, 200). Also, it is possible to improve the accuracy and the security in the procedure of updating the license information.

## Description

### BACKGROUND OF THE INVENTION

### 1. Field of the Invention

The present invention relates to transmission of content between devices, and more particularly, to a method of transmitting content between a host device and a mobile device.

### 2. Description of the Related Art

Recently, transmission of content using various communication media such as the Internet, ground waves, cable, and satellite has been rapidly increasing. Content is increasingly sold and lent by using mass storage media such as compact disks (CDs), digital video disks (DVDs), and the like. Accordingly, digital rights management (hereinafter, referred to as DRM), which is a solution for protecting copyrighted content, has become an important issue.

Specifically, the environments in which digital content is distributed have expanded due to a combination of new networks, services, and the like. In the past, it became possible to distribute content by using a personal computer (PC) connected to the Internet. Currently, content is also distributed by using digital broadcasting services and home networking services, using home appliances or mobile devices.

In order to prevent illegally distributed content from being used, a method of transmitting content capable of maintaining a high security level has been researched.

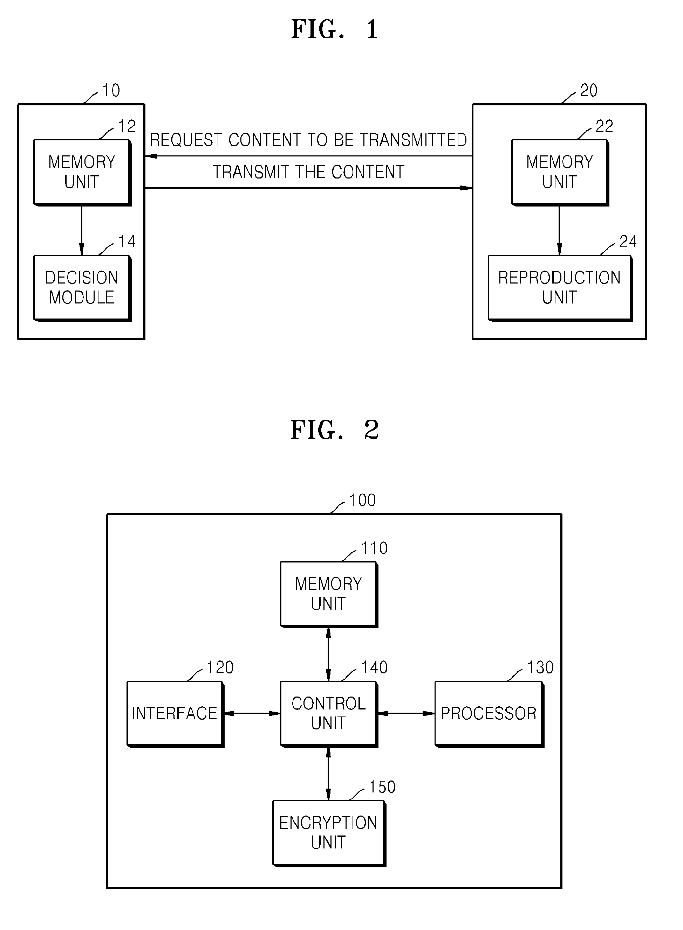

FIG. 1 illustrates a system for transmitting content between a mobile device 10 and a host device 20.

As shown in FIG. 1, the mobile device 10 includes a memory unit 12 for storing encrypted content and an encrypted license, and a decision module 14 for determining whether to transmit the content. The host device 20 includes a memory unit 22 for storing received content and a reproduction unit 24 for reproducing the content.

First, when the host device 20 requests content to be transmitted, the decision module 14 of the mobile device 10, which stores encrypted content, determines whether to transmit the content by identifying a license for the stored content.

Specifically, since the availability period, the limit on the number of copying operations, and the reproduction period of the stored content is recorded in the license stored in the memory unit 12 of the mobile device 10, the decision module 14 of the mobile device 10 determines whether to transmit the content based on the license. For example, in a case where the content is expired, even when the host device 20 requests the content to be transmitted, the decision module 14 of the mobile device 10 controls the mobile device 10 so that the content is not transmitted.

On the other hand, when it is determined that the content is valid, the mobile device 10 transmits the encrypted content to the host device 20. The reproduction unit 24 of the host device 20 reproduces the received content.

However, according to an existing technique, since the mobile device 10 includes the decision module, the mobile device may take on an extra processing load. Since there is no process for updating the license after transmitting the content, the license information may be inaccurate.

### SUMMARY OF THE INVENTION

According to the present invention there is provided receiving and transmitting methods, receiving and transmitting devices, and a system as set forth in the appended claims. Other features of the invention will be apparent from the dependent claims, and the description which follows.

The present invention provides a method capable of rapidly and stably determining whether to transmit content and improving accuracy and security in the process of updating license information.

According to an aspect of the present invention, there is provided a method of transmitting encrypted content in a situation in which an external device is connected to a host or requesting device, the method comprising: transmitting license information corresponding to the encrypted content to the external device; transmitting the encrypted content to the external device, upon receipt of a request for the transmission of the encrypted content from the external device; and updating the license information.

The license information to be updated is recorded before the encrypted content is transmitted.

The license information is encrypted by using a shared key generated by an AKE (authenticated key exchange) method with the external device and is transmitted to the external device.

The external device determines whether to request the encrypted content to be transmitted based on the received license information.

According to another aspect of the present invention, there is provided a method of receiving encrypted content in a state in which an external device is connected to a external device, the method comprising: receiving license information corresponding to the encrypted content from the external device; determining whether to request the encrypted content to be transmitted based on the received license information; and requesting the encrypted content to be transmitted based on the determination result and receiving the encrypted content.

The method further comprises requesting the license information to be updated.

When the license information that is encrypted by using a shared key generated by an AKE method with the external device is received, the license information that is encrypted by the shared key is decrypted.

According to another aspect of the present invention, there is provided a device comprising: a memory unit storing encrypted content and license information; an interface transmitting the license information corresponding to the encrypted content to an external device, in a state in which the external device is connected to the interface; a control unit allowing the encrypted content to be transmitted to the external device, when receiving the encrypted content from the external device; and a processor updating the license information.

The device further comprises an encryption unit encrypting the license information by using a shared key generated by an AKE method with the external device.

According to another aspect of the present invention, there is provided a device comprising: an interface receiving the license information corresponding to encrypted content from an external device, in a state in which the external device storing the encrypted content and license information is connected to the interface; and a decision module determining whether to request the encrypted content to be transmitted based on the received license information and requesting the encrypted content to be transmitted to the external device based on the determination result.

The device further comprises a decryption unit decrypting the received encrypted content, and a reproduction unit reproducing the decrypted content.

According to another aspect of the present invention, there is provided a system for transmitting content comprising: a first device storing encrypted content and license information, transmitting the license information corresponding to the encrypted content, and transmitting the encrypted content when receiving a request for transmitting the encrypted content; and a second device determining whether to request the encrypted content to be transmitted based on the received license information in a state in which the first device is connected to the second device, and requesting the external device to transmit the encrypted content based on the determination result.

### BRIEF DESCRIPTION OF THE DRAWINGS

The above and other features and advantages of the present invention will become more apparent by describing in detail exemplary embodiments thereof with reference to the attached drawings in which:
FIG. 1 illustrates a system for transmitting content between a mobile device and a host device;
FIG. 2 illustrates the structure of a mobile device according to an embodiment of the present invention;
FIG. 3 illustrates the structure of a host device according to an embodiment of the present invention;
FIG. 4 illustrates a method of transmitting content between the mobile device and the host device according to a first embodiment of the present invention;
FIG. 5 illustrates a method of transmitting content between the mobile device and the host device according to a second embodiment of the present invention; and
FIG. 6 illustrates a method of transmitting content between the mobile device and the host device according to a third embodiment of the present invention.

### DETAILED DESCRIPTION OF THE INVENTION

The attached drawings for illustrating exemplary embodiments of the present invention are referred to in order to gain a sufficient understanding of the present invention, the merits thereof, and the objectives accomplished by the implementation of the present invention.

Hereinafter, the present invention will be described in detail by explaining exemplary embodiments of the invention with reference to the attached drawings. Like reference numerals in the drawings denote like elements.

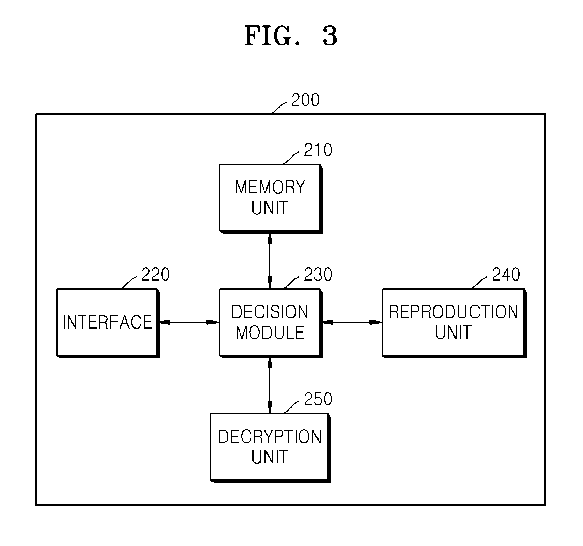

FIGS. 2 and 3 respectively illustrate a mobile device 100 and a host device 200 embodying a system for transmitting content between a mobile device and a host device according to an embodiment of the present invention.

FIG. 2 illustrates a structure of the mobile device 100 according to an embodiment of the present invention. At this time, the mobile device 100 represents a portable memory card, a storage medium, or the like. The mobile device 100 serves to store encrypted content and a license for the content.

As shown in FIG. 2, the mobile device 100 includes a memory device 110, an interface 120, a processor 130, a control unit 140, and an encryption unit 150.

The memory unit 110 stores encrypted content and the license information for the content. Information such as the availability period, the limit on the number of copying operations, and the reproduction period of the stored content is recorded in the license information.

When the mobile device 100 is connected to the host device 200, the interface 120 transmits the stored content and the license information to the host device 200.

The processor 130 updates the license information and records the updated license information in the control unit 140, after transmitting the license information to the host device 200. For example, when the license information for content, on which the limit on the number of copying operations is two, is transmitted to the host device 200, the processor 130 records in the license information that the limit on the number of copying operations becomes one in the control unit 140.

Upon receiving the updated license information from the processor 130 and transmitting the content, the control unit 140 approves the finally updated license information.

The encryption unit 150 can encrypt the content or the license information for the content.

FIG. 3 illustrates a structure of a host device 200 according to an embodiment of the present invention. At this time, the host device 200 serves to reproduce, copy or use the content.

As shown in FIG. 3, the host device 200 includes a memory unit 210, an interface 220, a decision module 230, and a reproduction unit 240.

The memory unit 210 stores encrypted content and license information for the content received from the mobile device 100.

When the host device 200 is connected to the mobile device 100, the interface 220 receives the content and the license information from the mobile device 100.

The decision module 230 determines whether the host device 200 can reproduce the content by analyzing the license information transmitted from the mobile device 100.

The reproduction unit 240 serves to reproduce, copy, or use decrypted content.

A decryption unit 250 serves to decrypt encrypted content or encrypted license information.

At this time, unlike the existing technique in which the decision module 230 is included in the mobile device, according to the embodiment of the present invention, the decision module 230 stored in the host device 200 determines whether to transmit the content.

Hereinafter, the method of transmitting the content between the mobile device 100 and the host device 200 will be described.

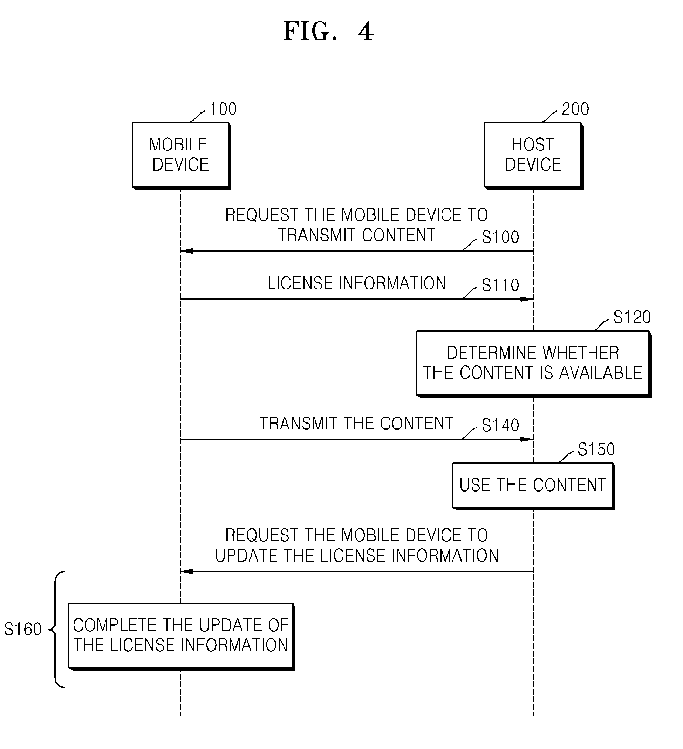

FIG. 4 illustrates a method of transmitting content between the mobile device 100 and the host device 200 according to a first embodiment of the present invention.

First, in a case where the mobile device 100 is connected to the host device 200, when a signal for selecting content is input into the host device 200 from outside, the host device 200 requests the mobile device 100 to transmit the selected content (operation S100).

Then, the mobile device 100 transmits the license information corresponding to the requested content to the host device 200 (operation S110).

When receiving the license information, the host device 200 determines whether the content corresponding to the license information is available in the host device 200 by analyzing the license information (operation S120).

For example, when receiving the license information that the limit on the number of reproduction operations is zero, the decision module 230 does not request the mobile device 100 to transmit the content. In addition, when receiving the license information that the limit of the number of reproduction operations is one, the decision module 230 determines that the mobile device 100 may transmit the content.

When the decision module 230 determines that the content is reproducible, the host device 200 requests the mobile device 100 to transmit the content, and the mobile device 100 transmits the encrypted content to the host device 200 (operation S140).

The host device 200 decrypts the encrypted content received from the mobile device 100 and allows the decrypted content to be reproduced, copied, or used (operation S150).

When the host device 200 requests the processor 130 of the mobile device 100 to update the license information after receiving or using the content, the control unit 140 finally approves the updated license information and completes the update of the license information (operation S160). The updated license information is stored in the memory unit 110.

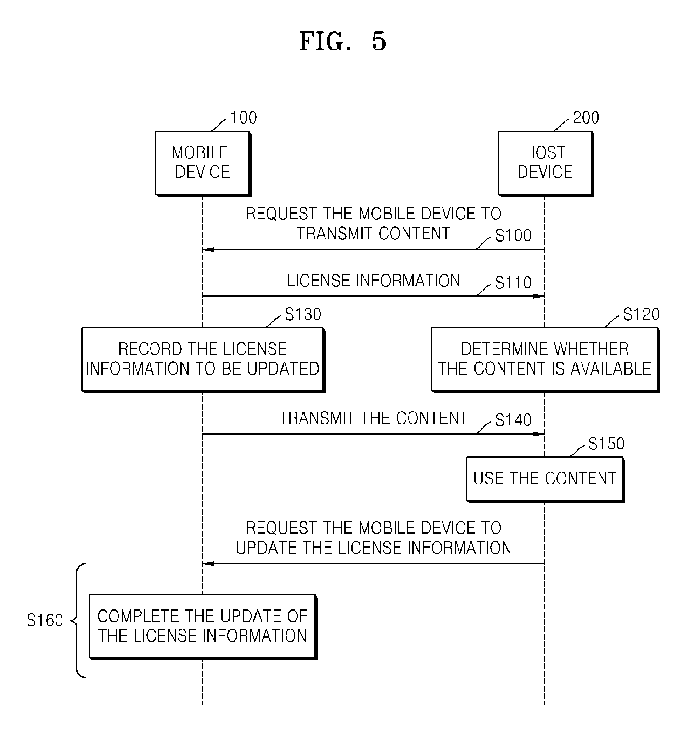

FIG. 5 illustrates a method of transmitting content between the mobile device 100 and the host device 200 according to a second embodiment of the present invention.

Unlike the first embodiment, according to the second embodiment of the present invention, the processor 130 of the mobile device 100 records the license information to be updated in the control unit 140 (operation S130) during the period in which the host device 200 determines whether to request the content to be transmitted (operation S120). That is, the license information to be updated is previously reported to the control unit 140, before the content is transmitted.

For example, when the license information for the content on which the limit on the number of copying operations is three is transmitted to the host device 200, the processor 130 records the license information that the limit on the number of copying operations becomes two in the control unit 140.

As described above, according to the second embodiment of the present invention, the process of updating the license information includes two operations S130 and S160. Thus, it is possible to improve accuracy and security in the procedure of updating the license information.

Since the second embodiment of the present invention is the same as the first embodiment of the present invention, except that the procedure of updating the license information includes two operations S130 and S160, hereinafter, a repeated description will be omitted.

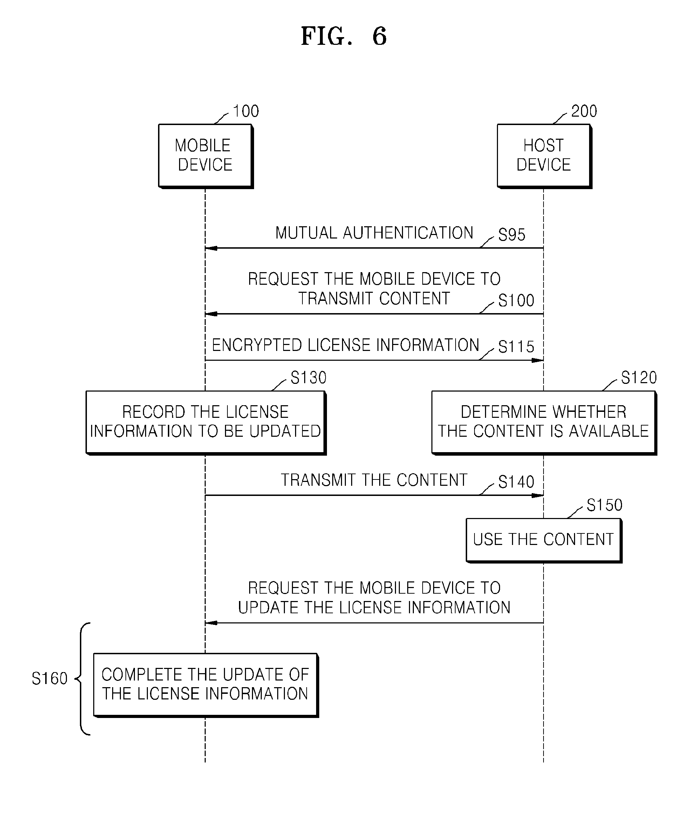

FIG. 6 illustrates a method of transmitting content between the mobile device 100 and the host device 200 according to a third embodiment of the present invention.

According to a third embodiment of the present invention, the mobile device 100 and the host device 200 are mutually authenticated by using an authenticated key exchange (hereinafter, referred to as AKE) method (operation S95). The license information is encrypted by using a shared key generated by the AKE method and transmitted to the host device 200 (operation S115). Since the third embodiment of the present invention is the same as the second embodiment of the present invention, except that the host device 200 which receives the encrypted license information decrypts the license information by using the shared key generated by the AKE method and in this way determines whether to request the content to be transmitted, hereinafter, a repeated description will be omitted.

As described above, according to an embodiment of the present invention, it is possible to reduce the processing load on the mobile device 100 and allow the decision module 230 to rapidly and stably operate by embedding the decision module 230 into the host device 200 instead of into the mobile device 100.

As described above, in the method of transmitting content between the mobile device and the host device, the content can be rapidly and stably transmitted by allowing the host device to determine whether to transmit the content. Also, it is possible to improve the accuracy and the security in the procedure of updating the license information.

The method of transmitting content between devices according to an embodiment of the present invention can be written as a computer program. Codes and code segments constituting the program can be easily construed by computer programmers of ordinary skill in the art to which the present invention pertains. In addition, the method of transmitting content between devices is embodied by storing the program in a computer-readable media, reading the program by using a computer, and executing the program. The computer-readable media include magnetic recording media, optical recording media, and carrier wave media.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of transmitting encrypted content in a state in which an external device (200) is connected, the method comprising:
transmitting license information corresponding to the encrypted content to the external device (200);
transmitting the encrypted content to the external device (200), when receiving a request for transmitting the encrypted content from the external device (200); and
updating the license information.

2. The method of claim 1, wherein the license information to be updated is recorded, before the encrypted content is transmitted.

3. The method of claim 1 or 2, wherein the license information is encrypted by using a shared key generated by an AKE (authenticated key exchange) method with the external device (200) and is transmitted to the external device (200).

4. The method of claim 3, wherein the external device (200) determines whether to request the encrypted content to be transmitted based on the received license information.

5. A method of receiving encrypted content in a state in which an external device (100) is connected, the method comprising:
receiving license information corresponding to the encrypted content from the external device (100);
determining whether to request the encrypted content to be transmitted based on the received license information; and
requesting the encrypted content to be transmitted based on the determination result and receiving the encrypted content.

6. The method of claim 5, further comprising requesting the license information to be updated.

7. The method of claim 5 or 6, wherein when the license information that is encrypted by using a shared key generated by an AKE method with the external device (100) is received, the license information that is encrypted by the shared key is decrypted.

8. A device (100) comprising:
a memory unit (110) storing encrypted content and license information;
an interface (120) transmitting the license information corresponding to the encrypted content to an external device (200), in a state in which the external device (200) is connected to the interface (120);
a control unit (140) allowing the encrypted content to be transmitted to the external device (200), when receiving the encrypted content from the external device (200); and
a processor (130) updating the license information.

9. The device of claim 8, further comprising an encryption unit (150) encrypting the license information by using a shared key generated by an AKE method with the external device (200).

10. The device of claim 8 or 9, wherein the processor records the license information to be updated, before transmitting the encrypted content.

11. The device of claim 10, wherein the external device (200) determines whether to request the encrypted content to be transmitted based on the received license information.

12. A device (200) comprising:
an interface (220) receiving the license information corresponding to encrypted content from an external device (100), in a state in which the external device (100) storing the encrypted content and license information is connected to the interface (220); and
a decision module (230) determining whether to request the encrypted content to be transmitted based on the received license information and requesting the encrypted content to be transmitted based on the determination result.

13. The device of claim 12, further comprising:
a decryption unit (250) decrypting the received encrypted content; and
a reproduction unit (240) reproducing the decrypted content.

14. The device of claim 12, further comprising a unit (230) requesting the external device (100) to update the license information.

15. The device of claim 13, wherein when receiving the license information that is encrypted by using a shared key generated by an AKE method with the external device (100), the decryption unit (250) decrypts the encrypted license information by using the shared key.

16. A system for transmitting content comprising:
a first device (100) storing encrypted content and license information, transmitting the license information corresponding to the encrypted content, and transmitting the encrypted content when receiving a request for transmitting the encrypted content; and
a second device (200) determining whether to request the encrypted content to be transmitted based on the received license information in a state in which the first device (100) is connected to the second device (200) and requesting the first device (100) to transmit the encrypted content based on the determination result.

17. The system of claim 16, wherein the first device (100) records the license information to be updated, before transmitting the encrypted content.

18. The system of claim 17, wherein the second device (200) requests the first device (100) to update the license information, after receiving the encrypted content.

19. The system of claim 18, wherein the first device (100) updates the license information.

20. The system of any of claims 16 to 18, wherein when the first and second devices (100, 200) generate a shared key by using an AKE method, and when the first device (100) encrypts the license information by using the shared key and transmits the encrypted license information to the second device (200), the second device (200) decrypts the license information by using the shared key.

21. The system of any of claims 16 to 20, wherein the second device (200) decrypts the received encrypted content and reproduces the decrypted content.

22. A computer-readable recording medium having embodied thereon a computer program for executing the method of any of claims 1 to 4.

23. A computer-readable recording medium having embodied thereon a computer program for executing the method of any of claims 5 to 7.
